# EUROPÄISCHE PATENTSCHRIFT

(11) **EP 3 348 883 B1**
(45) Veröffentlichungstag und Bekanntmachung des Hinweises auf die Patenterteilung: **18.11.2020**
(21) Anmeldenummer: 17185669.3
(22) Anmeldetag: 10.08.2017
(51) Int. Cl.: F16J 15/44, F01D 5/02, F01D 11/00, F01D 25/12

(54) **DICHTUNGSANORDNUNG FÜR EIN TURBINENZWISCHENGEHÄUSE EINER GASTURBINE**
SEALING ARRANGEMENT FOR AN INTERMEDIATE TURBINE HOUSING OF A GAS TURBINE
DISPOSITIF D'ÉTANCHÉITÉ POUR UN CARTER INTERMÉDIAIRE D'UNE TURBINE À GAZ

(30) Priorität: 22.09.2016 DE 102016218239
(43) Veröffentlichungstag der Anmeldung: 18.07.2018
(73) Patentinhaber: MTU Aero Engines AG, 80995 München (DE)
(72) Erfinder: Bokhorst, Willem, 85241 Hebertshausen (DE); Moritz, Fabian, 81247 München (DE)

(56) Entgegenhaltungen:
- EP-A1- 3 118 418
- EP-A2- 0 818 607
- US-A1- 2007 025 835

## Beschreibung

Die vorliegende Erfindung betrifft eine Dichtungsanordnung für ein Turbinenzwischengehäuse einer Gasturbine, insbesondere Fluggasturbine, mit einer rohrartigen Fluidleitung, insbesondere Ölleitung, die sich entlang einer Axialrichtung erstreckt, einer die Fluidleitung radial außen und in Umfangsrichtung umgebenden Lagerhülse und wenigstens einem in Radialrichtung zwischen Fluidleitung und Lagerhülse angeordneten Dichtungsring, der um die Fluidleitung herum angeordnet ist. Als Axialrichtung ist dabei die Haupterstreckungsrichtung der Fluidleitung zu verstehen.

In einem Turbinenzwischengehäuse werden Ölleitungen zur Versorgung eines Lagers durch Streben geführt, die sich durch einen Heißgas führenden Ringkanal erstrecken. Diese Leitungen weisen ein sogenanntes Festlager und ein sogenanntes Loslager auf. Das Loslager der Leitungen ist derart ausgelegt, dass im Betrieb der Gasturbine Bewegungen in Axialrichtung der rohrartigen Leitungen erlaubt sind. Im Bereich des Loslagers erfolgt dabei die Abdichtung über einen Kolbenring, der an der Leitung außen, insbesondere in einer an der Leitung angeordneten Nut vorgesehen ist. Dieser in Axialrichtung der Leitung eher gering dimensionierte Kolbenring dichtet nicht nur, sondern überträgt im Betrieb auch Kräfte orthogonal zur Axialrichtung der rohrartigen Leitungen. Dabei kann es zwischen Kolbenring, Leitung und äußerem Halter, der hier als Lagerhülse bezeichnet ist, zu Verschleiß kommen. Insbesondere kann es an den Kontaktstellen zwischen Kolbenring, Leitung und Lagerhülse im Betrieb der Gasturbine zu Fretting kommen, wenn die Ölleitungen und/oder der Kolbenring selbst, welcher in der Regel als geschlitzter Ring ausgebildet ist, zu vibrieren beginnen.

Dichtungsanordnungen im Bereich einer Gasturbinenwelle zur Abdichtung einer Lagerkammer eines Wellenlagers sind aus den Dokumenten EP0818607A2 und US2007/025835A1 bekannt.

Aufgabe der Erfindung ist es, eine Dichtungsanordnung bereitzustellen, mit der die obigen Nachteile vermieden werden können.

Zur Lösung dieser Aufgabe wird erfindungsgemäß vorgeschlagen, dass der Dichtungsring wenigstens teilweise in einer in der Lagerhülse vorgesehenen Nut aufgenommen ist. Dies ermöglicht, dass der Dichtungsring bei Bewegungen, die im Betrieb auftreten, in die Nut in der Lagerhülse eintauchen kann, ohne dass der Dichtungsring zur Übertragung von Kräften dient.

Die Lagerhülse kann einen axial vorderen Hülsenabschnitt und einen gesonderten axial hinteren Hülsenabschnitt aufweisen, die im zusammengebauten Zustand der Dichtungsanordnung in Axialrichtung aneinander anliegen. Dabei kann die Nut durch den axial vorderen Hülsenabschnitt und den axial hinteren Hülsenabschnitt gebildet sein. Ein derartiger zweiteiliger Aufbau ermöglicht einen einfachen Zusammenbau und auch ein einfaches Austauschen der Dichtungsanordnung.

Der Dichtungsring kann an einer radialen Außenseite der Fluidleitung anliegen und zu einem radial weiter außen liegenden Nutgrund der Nut einen Ringabstand aufweisen. Die Fluidleitung kann zum axial vorderen Hülsenabschnitt und zum axial hinteren Hülsenabschnitt einen Hülsenabstand aufweisen. Dabei ist es bevorzugt, dass der Ringabstand größer ist als der Hülsenabstand. Bei Bewegungen bzw. thermischen Ausdehnungen liegen aufgrund des geringeren Hülsenabstands die Fluidleitung und die Lagerhülse direkt aneinander an. Dabei wird der Dichtungsring in die Nut bewegt, berührt aber aufgrund des größeren Ringabstands nicht den Nutboden. Somit kann verhindert werden, dass der Dichtungsring wirkende Kräfte überträgt. Durch das Anliegen von Fluidleitung und Lagerhülse aneinander werden die wirkenden Kräfte auf eine größere Fläche verteilt, so dass die pro Flächeneinheit wirkende Kraft geringer ist. Dies führt insgesamt zu weniger Verschleiß.

Der axial vordere Hülsenabschnitt und/oder der axial hintere Hülsenabschnitt können in Axialrichtung und nach radial außen an einer Aufnahmehülse abgestützt sein. Dabei kann die Aufnahmehülse eine erste Halteeinrichtung und eine zweite Halteeinrichtung aufweisen, zwischen denen der axial vordere Hülsenabschnitt und der axial hintere Hülsenabschnitt eingepasst sind, wobei vorzugsweise die erste Halteeinrichtung durch einen den axial vorderen Hülsenabschnitt abstützenden Haltering gebildet ist, der mit der Aufnahmehülse verbunden ist, und weiter vorzugsweise die zweite Halteeinrichtung durch einen den axial hinteren Hülsenabschnitt abstützenden, in der Aufnahmehülse ausgebildeten Radialvorsprung gebildet ist.

Die Dichtungsanordnung kann eine gleitlagerartige Aufnahme bilden, um Bewegungen der Fluidleitung in Axialrichtung zu ermöglichen.

Die Erfindung betrifft ferner auch ein Turbinenzwischengehäuse einer Gasturbine, insbesondere Fluggasturbine, mit einem Heißgas führenden Ringkanal und wenigstens einem radial innen liegenden Lager zur Abstützung wenigstens einer Welle der Gasturbine, wobei das Turbinenzwischengehäuse mehrere, das wenigstens eine Lager abstützende Streben aufweist, die sich vom Lager durch den Ringkanal hindurch erstrecken, wobei in wenigstens einer der Streben eine oben beschriebene Dichtungsanordnung aufgenommen ist.

Bei einem solchen Turbinenzwischengehäuse kann die Dichtungsanordnung auf der dem Lager zugwandten Seite der Strebe angeordnet sein. Das bedeutet, dass die Dichtungsanordnung bezogen auf eine Maschinenachse der Gasturbine radial innen angeordnet ist. Alternativ kann sich die Dichtungsanordnung aber auch auf der dem Lager abgewandten Seite der Strebe angeordnet sein, also bezogen auf die Maschinenachse der Gasturbine radial außen.

Nachfolgend wird die Erfindung unter Bezugnahme auf die anliegenden Figuren beispielhaft und nicht einschränkend beschrieben.
Fig. 1 zeigt in einer stark vereinfachten schematischen Übersicht eine Gasturbine, wobei eine mögliche Anordnung einer Dichtungsanordnung erläutert wird.
Fig. 2 zeigt die Dichtungsanordnung in einer vereinfachten Schnittdarstellung.
Fig. 3 zeigt in den Teilfiguren A) und B) eine Vergrößerung der Dichtungsanordnung etwa entsprechend dem gestrichelten Ausschnitt III der Fig. 2, wobei Fig. 3A einen Ruhezustand und Fig. 3B einen Betriebszustand darstellt.

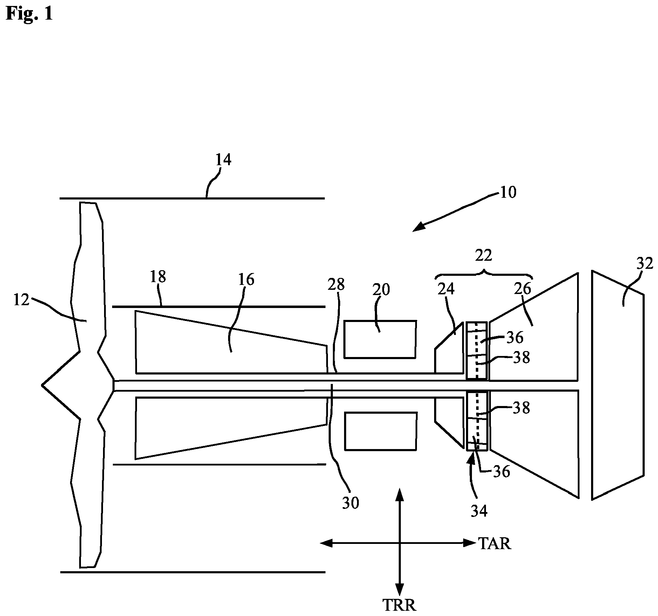

Fig. 1 zeigt stark vereinfacht und schematisch den Aufbau einer Gasturbine 10, insbesondere einer Fluggasturbine (z.B. Mantelstromtriebwerk). Die Gasturbine 10 umfasst einen Fan 12, der von einem angedeuteten Mantel 14 umgeben ist. In einer axialen Richtung TAR der Gasturbine 10 schließt sich an den Fan 12 ein Verdichter 16 an, der in einem angedeuteten inneren Gehäuse 18 aufgenommen ist und einstufig oder mehrstufig ausgebildet sein kann. An den Verdichter 16 schließt sich die Brennkammer 20 an. Aus der Brennkammer 20 ausströmendes Heißgas strömt dann durch die sich anschließende Turbine 22, die einstufig oder mehrstufig ausgebildet sein kann. Im vorliegenden Beispiel umfasst die Turbine 22 eine Hochdruckturbine 24 und eine Niederdruckturbine 26. Eine Hohlwelle 28 verbindet die Hochdruckturbine 24 mit dem Verdichter 16, insbesondere einen Hochdruckverdichter, so dass diese gemeinsam drehen. Eine weitere innen liegende Welle 30 verbindet die Niederdruckturbine 26 mit dem Fan 12 und ggf. mit einem hier nicht dargestellten Niederdruckverdichter, so dass diese gemeinsam drehen. An die Turbine 22 kann sich eine Schubdüse 32 anschließen.

Im dargestellten Beispiel ist zwischen der Hochdruckturbine 24 und der Niederdruckturbine 26 ein Turbinenzwischengehäuse 34 angeordnet, das um die Wellen 28, 30 angeordnet ist. In seinem radial äußeren Bereich 36, einem Ringkanal, wird das Turbinenzwischengehäuse von heißen Abgasen aus der Hochdruckturbine 24 durchströmt. Durch diesen Ringkanal erstrecken sich in Radialrichtung der Turbine TRR hier als gestrichelte Linien schematisch dargestellte Streben 38, die dazu dienen, die Wellen 28, 30 abzustützen. Die Streben 38 sind radial außen mit weiteren, hier nicht dargestellten, tragenden Strukturen der Gasturbine verbunden. In den Streben 38 sind Fluidleitungen, insbesondere Ölleitungen vorgesehen, um dem Lagerbereich der Wellen 28, 30 Öl zuführen zu können.

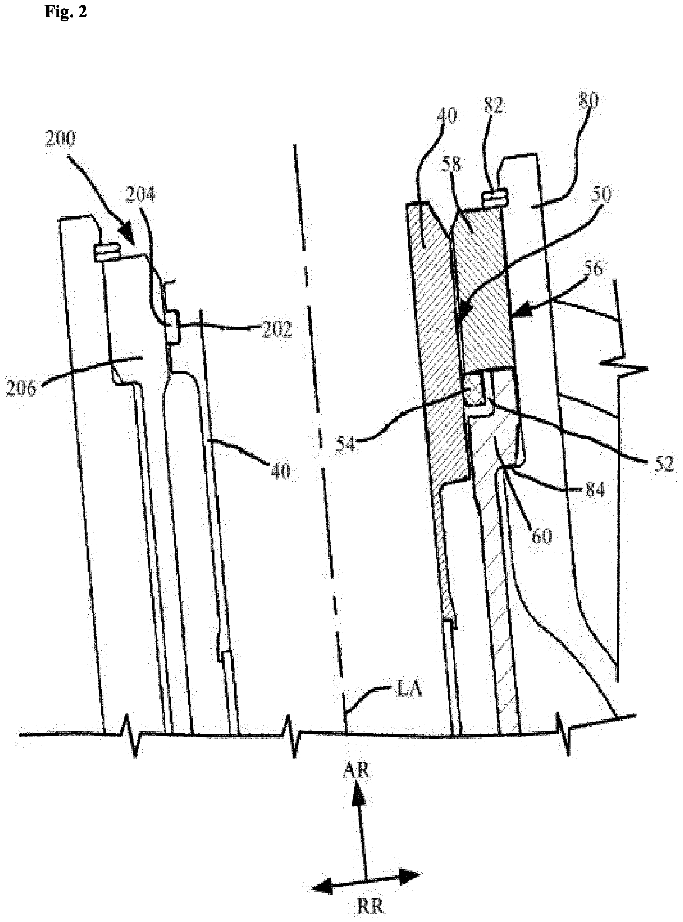

In Fig. 2 ist eine Fluidleitung 40 dargestellt, die in einer Strebe 38 aufgenommen sein kann. Die Fluidleitung 40 ist im Wesentlichen rohrförmig ausgebildet und erstreckt sich entlang einer axialen Längsrichtung AR. Diese auf die Fluidleitung 40 bezogene Axialrichtung AR entspricht bezogen auf eine Maschinenachse einer Gasturbine im Wesentlichen der Radialrichtung TRR (Fig. 1). Die Erfindung wird nachfolgend unter Bezugnahme auf die Richtungsangaben bezogen auf die Axialrichtung AR der Fluidleitung 40 beschrieben. Dabei ist in der Fig. 1 weiter die Radialrichtung RR der Fluidleitung 40 eingezeichnet.

Bezogen auf eine zur Axialrichtung AR parallele Längsachse LA der Fluidleitung 40 ist links in der Fig. 2 eine bekannte Dichtungsanordnung 200 dargestellt. Bei dieser bekannten Dichtungsanordnung 200 ist an der Fluidleitung 40 eine Nut 202 vorgesehen, in der ein Dichtungsring 204 aufgenommen ist. Der Dichtungsring 204 liegt radial außen an einer Lagehülse 206 an. Der Dichtungsring 204 dient bei einer bekannten Dichtungsanordnung 200 auch als Lagerung der Fluidleitung 40 an der Lagerhülse 206 und überträgt somit im Betrieb wirkende Kräfte.

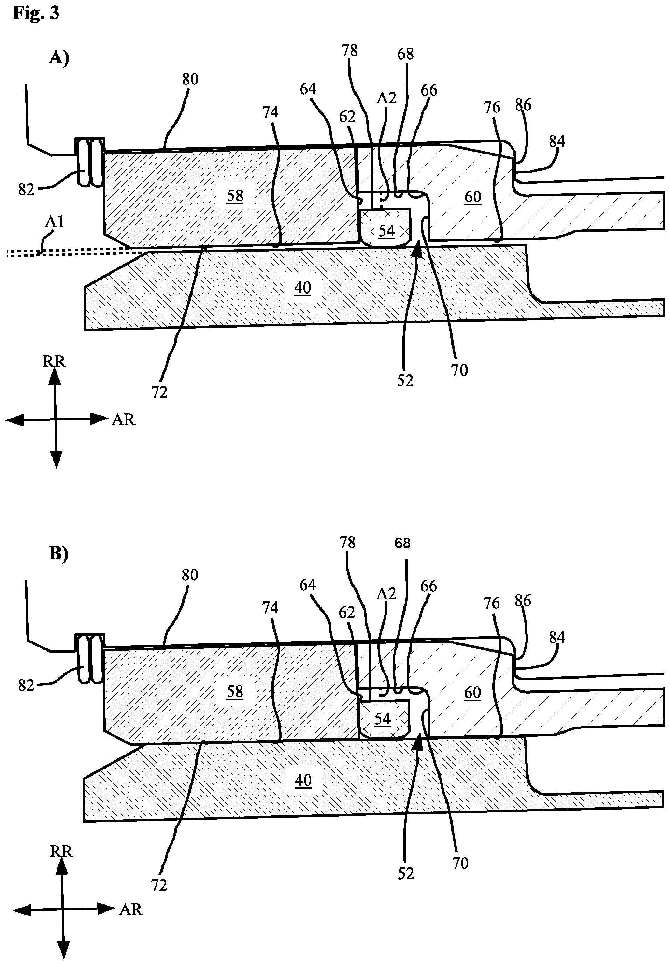

Bezogen auf die Längsachse LA ist rechts in der Fig. 2 eine Ausführungsform einer erfindungsgemäßen Dichtungsanordnung 50 dargestellt. Diese Dichtungsanordnung 50 wird nun unter gleichzeitiger Bezugnahme auf die Fig. 2, 3A und 3B erläutert. Dabei stellt die Fig. 3A eine Vergrößerung der Dichtungsanordnung 50 dar, die bezogen auf die Fig. 2 um etwa 90° im Gegenuhrzeigersinn gedreht dargestellt ist.

Bei der Dichtungsanordnung 50 ist ein Dichtungsring 54 wenigstens teilweise in einer Nut 52 aufgenommen, wobei diese Nut 52 in einer Lagerhülse 56 vorgesehen ist. Die Lagerhülse 56 weist einen axial vorderen Hülsenabschnitt 58 und einen axial hinteren Hülsenabschnitt 60 auf. Die beiden Hülsenabschnitte 58, 60 liegen in Axialrichtung AR bei 62 aneinander an. Die Lagerhülse 56 ist also in dieser Ausführungsform mehrteilig bzw. wenigstens zweiteilig ausgeführt.

Die Nut 52 wird einerseits durch eine axiale Rückwand 64 des vorderen Hülsenabschnitts 58 und eine in dem hinteren Hülsenabschnitt 60 vorgesehene Aussparung 66 gebildet. In der Aussparung 66 ist am hinteren Hülsenabschnitt 60 ein Nutgrund 68 und eine der Rückwand 64 gegenüberliegenden Seitenwand 70 der Nut 52 ausgebildet. Die Seitenwand 70 kann auch als axiale Vorderseite des hinteren Hülsenabschnitts 60 im Bereich der Nut 52 bezeichnet werden. Wie aus der Darstellung der Fig. 3A ersichtlich, ist der Dichtungsring 54 wenigstens teilweise in der Nut 52 aufgenommen.

In einem Ruhezustand der Gasturbine ist zwischen einer radialen Außenseite 72 der Fluidleitung 40 und einer radialen Innenseite 74 des vorderen Hülsenabschnitts 58 bzw. einer radialen Innenseite 76 des hinteren Hülsenabschnitts 60 ein erster Abstand A1 vorhanden. Dieser Abstand A1 kann auch als Hülsenabstand bezeichnet werden. Zwischen einer radialen Außenseite 78 des Dichtungsrings 54 und der Nut 52, insbesondere dem Nutgrund 68 ist ein Abstand A2 vorhanden. Dieser Abstand kann auch als Ringabstand bezeichnet werden. Wie aus der Darstellung der Fig. 3A ersichtlich, ist der Ringabstand A2 größer als der Hülsenabstand A1.

In einem Betriebszustand, in dem durch Schwingungen und thermische Einflüsse in der Gasturbine die unterschiedlichen Komponenten sich relativ zueinander bewegen, kann der Fall auftreten, der in Fig. 3B dargestellt ist. Die Fluidleitung 40 komm mit ihrer radialen Außenseite 72 in Anlage an die radialen Innenseiten 74, 76 der beiden Hülsenabschnitte 58, 60. Dabei werden im Betrieb wirkende Kräfte über die aneinander anliegenden Seiten bzw. Flächen zuverlässig und verteilt übertragen. In einem solchen Zustand wird der Dichtungsring 54 weiter in die Nut 52 hinein bewegt. Der Dichtungsring 54 nähert sich dabei dem Nutgrund 68 an. Allerdings ist der Abstand A2 so gewählt, dass der Dichtungsring 54 auch im Betriebszustand nicht mit dem Nutgrund 68 in Kontakt kommt. Somit werden über den Dichtungsring 54 keine Kräfte zwischen Fluidleitung 40 und Lagerhülse 56 übertragen. Aufgrund der größeren Fläche, an denen die Fluidleitung 40 und die Lagerhülse 56 aneinander anliegen, sind die wirkenden Kräfte pro Flächeneinheit geringer, was zu einer Verringerung beim Verschleiß führt. Ferner unterliegt auch der Dichtungsring 54 einem geringen Verschleiß, weil er keine Kraft übertragende Funktion hat, wie ein Dichtungsring 204 bei einer bekannten Dichtungsanordnung 200 (Fig. 1).

Der Dichtungsring 54 liegt radial innen an der Außenseite 72 der Fluidleitung 40 an. In Axialrichtung liegt der Dichtungsring 54 an der Rückwand 64 des vorderen Hülsenabschnitts an. Entsprechend kann der Dichtungsring seine Dichtwirkung sowohl in einem Zustand gemäß Fig. 3A, als auch in einem Zustand gemäß Fig. 3B entfalten.

Die Lagerhülse 56 bzw. der vordere Hülsenabschnitt 58 und der hintere Hülsenabschnitt 60 sind in einer radial außen angeordneten Aufnahmehülse 80 angeordnet. Die Aufnahmehülse 80 umfasst eine erste Halteeinrichtung 82 und eine zweite Halteeinrichtung 84, zwischen denen der axial vordere Hülsenabschnitt 58 und der axial hintere Hülsenabschnitt 60 eingepasst bzw. eingespannt bzw. eingepresst sind. In der vorliegenden Ausführungsform ist beispielsweise die erste Halteeinrichtung 82 durch einen den axial vorderen Hülsenabschnitt 58 abstützenden Haltering gebildet, der mit der Aufnahmehülse 80 verbunden ist. Die zweite Halteeinrichtung 84 ist beispielsweise durch einen den axial hinteren Hülsenabschnitt 60 abstützenden, in der Aufnahmehülse 80 ausgebildeten Radialvorsprung 86 gebildet.

Durch die in wenigstens zwei Hülsenabschnitte 58, 60 aufgeteilte Lagerhülse muss der Dichtungsring 54 nicht mehr auf der Fluidleitung befestigt werden, insbesondere dort in einer Nut untergebracht werden. Der Dichtungsring 54 kann daher robuster sein und einen größeren Querschnitt aufweisen. Da ferner auch eine Kontaktkraft nicht mehr über den Dichtungsring 54 übertragen wird, sondern direkt von der Fluidleitung 40 auf die Lagerhülse 56 übertragen wird, kann dem Verschleiß an den Bauteilen entgegengewirkt werden. Der Dichtungsring 54 kann in der Nut 52 verschwinden, ist aber beispielsweise in einem Zustand gemäß Fig. 3A nur teilweise in der Nut 52 aufgenommen. Durch die hier vorgeschlagene Dichtungsanordnung kann auch ein bei einer herkömmlichen Dichtungsanordnung 200 (Fig. 1) vorkommendes Herausspringen des Dichtungsrings verhindert werden. Es ergibt sich also insgesamt eine hoch wirksame und verschleißarme Dichtungsanordnung für eine Fluidleitung in einer Strebe eines Turbinenzwischengehäuses.

Ein weiterer Vorteil des dargestellten Ausführungsbeispiels der vorliegenden Erfindung besteht darin, dass durch die zweiteilige Ausbildung der Lagerhülse 56 der Dichtungsring 54 einfacher montiert und bei Bedarf wieder demontiert bzw. ausgewechselt werden kann. Anders als bei der aus dem Stand der Technik bekannten Ausführungsform ist es hierzu nämlich nicht notwendig, die Fluidleitung 40 komplett aus der Lagerhülse 206 zu ziehen, um an die den Dichtungsring 54 aufnehmende Nut 202 zu gelangen, sondern es reicht aus, die erste Halteeinrichtung 82, die in diesem Ausführungsbeispiel durch wenigstens einen in einer Nut in der Aufnahmehülse 80 aufgenommenen Haltering gebildet ist, zu lösen und den vorderen Hülsenabschnitt 58 aus der Aufnahmehülse 80 zu ziehen, um Zugang zu der den Dichtungsring 54 aufnehmenden Nut 52 zu erlangen.

Ferner erlaubt es die zweiteilige Ausbildung der Lagerhülse 56, den Dichtungsring 54 bei Bedarf auch als einen um seinen Umfang geschlossenen Ring auszubilden, was bei der aus dem Stand der Technik bekannten Ausführungsform nicht möglich ist, zumindest dann nicht, wenn der Dichtungsring nicht aus einem sehr elastischen Material hergestellt ist.

### Bezugszeichenliste

- 10: Gasturbine
- 12: Fan
- 14: Mantel
- 16: Verdichter
- 18: inneres Gehäuse
- 20: Brennkammer
- 22: Turbine
- 24: Hochdruckturbine
- 26: Niederdruckturbine
- 28: Hohlwelle
- 30: innen liegende Welle
- 32: Schubdüse
- 34: Turbinenzwischengehäuse
- 36: Ringkanal
- 38: Strebe
- 40: Fluidleitung
- 50: Dichtungsanordnung
- 52: Nut
- 54: Dichtungsring
- 56: Lagerhülse
- 58: axial vorderer Hülsenabschnitt
- 60: axial hinterer Hülsenabschnitt
- 62: Anlage zwischen 58 und 60
- 64: Rückwand
- 66: Aussparung
- 68: Nutgrund
- 70: Seitenwand
- 72: Außenseite von 40
- 74: Innenseite von 58
- 76: Innenseite von 60
- 78: Außenseite von 54
- 80: Aufnahmehülse
- 82: erste Halteeinrichtung / Haltering
- 84: zweite Halteeinrichtung
- 86: Radialvorsprung
- A1: erster Abstand / Hülsenabstand
- A2: zweiter Abstand / Ringabstand
- AR: Axialrichtung der Fluidleitung 40
- RR: Radial Richtung der Fluidleitung 40
- TAR: Axialrichtung der Gasturbine 10
- TRR: Radialrichtung der Gasturbine 10
- 200: Dichtungsanordnung (Stand der Technik)
- 202: Nut (Stand der Technik)
- 204: Dichtungsring (Stand der Technik)
- 206: Lagerhülse (Stand der Technik)

## Patentansprüche

1. Dichtungsanordnung (50) zur Abdichtung in einer sich durch den Ringkanal (36) einer Gasturbine (10) hindurch erstreckenden Strebe (38) eines Turbinenzwischengehäuses (34) der Gasturbine (10), insbesondere Fluggasturbine, mit
einer rohrartigen Fluidleitung (40), insbesondere Ölleitung, die sich entlang einer Axialrichtung (AR) erstreckt,
einer die Fluidleitung (40) radial außen und in Umfangsrichtung umgebenden Lagerhülse (56) und
wenigstens einem in Radialrichtung (RR) zwischen Fluidleitung (40) und Lagerhülse (56) angeordneten Dichtungsring (54), der um die Fluidleitung (40) herum angeordnet ist,
**dadurch gekennzeichnet, dass** der Dichtungsring (54) wenigstens teilweise in einer in der Lagerhülse (56) vorgesehenen Nut (52) aufgenommen ist.

2. Dichtungsanordnung nach Anspruch 1, **dadurch gekennzeichnet, dass** die Lagerhülse (56) einen axial vorderen Hülsenabschnitt (58) und einen gesonderten axial hinteren Hülsenabschnitt (60) aufweist, die im zusammengebauten Zustand der Dichtungsanordnung (50) in Axialrichtung (AR) aneinander anliegen.

3. Dichtungsanordnung nach Anspruch 2, **dadurch gekennzeichnet, dass** die Nut (52) durch den axial vorderen Hülsenabschnitt (58) und den axial hinteren Hülsenabschnitt (60) gebildet ist.

4. Dichtungsanordnung nach einem der vorhergehenden Ansprüche, **dadurch gekennzeichnet, dass** der Dichtungsring (54) an einer radialen Außenseite (72) der Fluidleitung (40) anliegt und zu einem radial weiter außen liegenden Nutgrund (68) der Nut (52) einen Ringabstand (A2) aufweist.

5. Dichtungsanordnung nach einem der vorhergehenden Ansprüche, **dadurch gekennzeichnet, dass** die Fluidleitung (40) zum axial vorderen Hülsenabschnitt (58) und/oder zum axial hinteren Hülsenabschnitt (60) in Radialrichtung (RR) einen Hülsenabstand (A1) aufweist.

6. Dichtungsanordnung nach Anspruch 4 und 5, **dadurch gekennzeichnet, dass** der Ringabstand (A2) größer ist als der Hülsenabstand (A1).

7. Dichtungsanordnung nach einem der vorhergehenden Ansprüche, **dadurch gekennzeichnet, dass** der axial vordere Hülsenabschnitt (58) und der axial hintere Hülsenabschnitt (60) in Axialrichtung (AR) und nach radial außen an einer Aufnahmehülse (80) abgestützt sind.

8. Dichtungsanordnung nach Anspruch 7, **dadurch gekennzeichnet, dass** die Aufnahmehülse (80) eine erste Halteeinrichtung (82) und eine zweite Halteeinrichtung (84) aufweist, zwischen denen der axial vordere Hülsenabschnitt (58) und der axial hintere Hülsenabschnitt (60) eingepasst sind, wobei vorzugsweise die erste Halteeinrichtung (82) durch einen den axial vorderen Hülsenabschnitt (58) abstützenden Haltering gebildet ist, der mit der Aufnahmehülse (80) verbunden ist, und weiter vorzugsweise die zweite Halteeinrichtung (84) durch einen den axial hinteren Hülsenabschnitt (60) abstützenden, in der Aufnahmehülse (80) ausgebildeten Radialvorsprung (86) gebildet ist.

9. Dichtungsanordnung nach einem der vorhergehenden Ansprüche, **dadurch gekennzeichnet, dass** sie eine gleitlagerartige Aufnahme bildet, um Bewegungen der Fluidleitung (40) in Axialrichtung (AR) zu ermöglichen.

10. Turbinenzwischengehäuse (34) einer Gasturbine (10), insbesondere Fluggasturbine, mit einem Heißgas führenden Ringkanal (36) und wenigstens einem radial innen liegenden Lager zur Abstützung wenigstens einer Welle (28, 30) der Gasturbine (10), wobei das Turbinenzwischengehäuse (34) mehrere, das wenigstens eine Lager abstützende Streben (38) aufweist, die sich vom Lager durch den Ringkanal (36) hindurch erstrecken, **dadurch gekennzeichnet, dass** in wenigstens einer der Streben (38) eine Dichtungsanordnung (50) nach einem der vorhergehenden Ansprüche aufgenommen ist.

11. Turbinenzwischengehäuse nach Anspruch 10, **dadurch gekennzeichnet, dass** die Dichtungsanordnung (50) auf der dem Lager zugewandten Seite der Strebe (38) angeordnet ist.

## Claims

1. Sealing arrangement (50) for sealing in a strut (38) of an intermediate turbine housing (34) of a gas turbine (10), in particular an aircraft gas turbine, which strut extends through the annular channel (36) of the gas turbine (10),
comprising a tubular fluid line (40), in particular an oil line, which extends in an axial direction (AR),
a bearing sleeve (56) which surrounds the fluid line (40) radially outwardly and in the circumferential direction, and
at least one sealing ring (54) which is arranged between the fluid line (40) and the bearing sleeve (56) in a radial direction (RR) and is arranged around the fluid line (40),
**characterized in that** the sealing ring (54) is received, at least in part, in a groove (52) provided in the bearing sleeve (56).

2. Sealing arrangement according to claim 1, **characterized in that** the bearing sleeve (56) has an axially front sleeve portion (58) and a separate axially rear sleeve portion (60) which, when the sealing arrangement (50) is assembled, abut in the axial direction (AR).

3. Sealing arrangement according to claim 2, **characterized in that** the groove (52) is formed by the axially front sleeve portion (58) and the axially rear sleeve portion (60).

4. Sealing arrangement according to any of the preceding claims, **characterized in that** the sealing ring (54) abuts a radial outer side (72) of the fluid line (40) and has a ring spacing (A2) from a radially further outward groove base (68) of the groove (52).

5. Sealing arrangement according to any of the preceding claims, **characterized in that** the fluid line (40) has, in the radial direction (RR), a sleeve spacing (A1) from the axially front sleeve portion (58) and/or from the axially rear sleeve portion (60).

6. Sealing arrangement according to claims 4 and 5, **characterized in that** the ring spacing (A2) is larger than the sleeve spacing (A1).

7. Sealing arrangement according to any of the preceding claims, **characterized in that** the axially front sleeve portion (58) and the axially rear sleeve portion (60) are supported in the axial direction (AR) and radially outwardly on a receiving sleeve (80).

8. Sealing arrangement according to claim 7, **characterized in that** the receiving sleeve (80) has a first holding device (82) and a second holding device (84), between which the axially front sleeve portion (58) and the axially rear sleeve portion (60) are fitted, the first holding device (82) preferably being formed by a holding ring which supports the axially front sleeve portion (58) and is connected to the receiving sleeve (80), and the second holding device (84) more preferably being formed by a radial projection (86) which supports the axially rear sleeve portion (60) and is formed in the receiving sleeve (80).

9. Sealing arrangement according to any of the preceding claims, **characterized in that** said arrangement forms a sliding-bearing-like receptacle in order to allow movements of the fluid line (40) in the axial direction (AR).

10. Intermediate turbine housing (34) of a gas turbine (10), in particular an aircraft gas turbine, comprising an annular channel (36) conveying hot gas, and at least one radially inner bearing for supporting at least one shaft (28, 30) of the gas turbine (10), the intermediate turbine housing (34) having a plurality of struts (38) which support the at least one bearing and extend from the bearing through the annular channel (36), **characterized in that** a sealing arrangement (50) according to any of the preceding claims is received in at least one of the struts (38).

11. Intermediate turbine housing according to claim 10, **characterized in that** the sealing arrangement (50) is arranged on the side of the strut (38) facing the bearing.

## Revendications

1. Dispositif d'étanchéité (50) pour l'étanchéification d'une entretoise (38), s'étendant à travers le canal annulaire (36) d'une turbine à gaz (10), d'un carter intermédiaire (34) de la turbine à gaz (10), en particulier d'une turbine à gaz d'avion, comportant
une conduite de fluide (40) tubulaire, en particulier une conduite d'huile, qui s'étend le long d'une direction axiale (AR),
un manchon de palier (56) entourant la conduite de fluide (40) radialement vers l'extérieur et dans la direction circonférentielle, et
au moins un anneau d'étanchéité (54) disposé dans la direction radiale (RR) entre la conduite de fluide (40) et le manchon de palier (56), lequel anneau d'étanchéité est disposé autour de la conduite de fluide (40),
**caractérisé en ce que** l'anneau d'étanchéité (54) est logé au moins partiellement dans une rainure (52) prévue dans le manchon de palier (56).

2. Dispositif d'étanchéité selon la revendication 1, **caractérisé en ce que** le manchon de palier (56) comporte une section de manchon axialement avant (58) et une section de manchon axialement arrière (60) séparée, lesquelles, à l'état monté du dispositif d'étanchéité (50), reposent l'une sur l'autre dans la direction axiale (AR).

3. Dispositif d'étanchéité selon la revendication 2, **caractérisé en ce que** la rainure (52) est formée par la section de manchon axialement avant (58) et la section de manchon axialement arrière (60).

4. Dispositif d'étanchéité selon l'une des revendications précédentes, **caractérisé en ce que** l'anneau d'étanchéité (54) repose sur un côté extérieur radial (72) de la conduite de fluide (40) et présente une distance annulaire (A2) par rapport à un fond de rainure (68) de la rainure (52) se trouvant radialement plus à l'extérieur.

5. Dispositif d'étanchéité selon l'une des revendications précédentes, **caractérisé en ce que** la conduite de fluide (40) présente, vers la section de manchon axialement avant (58) et/ou vers la section de manchon axialement arrière (60), une distance de manchon (A1) dans la direction radiale (RR).

6. Dispositif d'étanchéité selon les revendications 4 et 5, **caractérisé en ce que** la distance annulaire (A2) est supérieure à la distance de manchon (A1).

7. Dispositif d'étanchéité selon l'une des revendications précédentes, **caractérisé en ce que** la section de manchon axialement avant (58) et la section de manchon axialement arrière (60) s'appuient dans la direction axiale (AR) et radialement vers l'extérieur sur un manchon de logement (80).

8. Dispositif d'étanchéité selon la revendication 7, **caractérisé en ce que** le manchon de logement (80) comporte un premier moyen de retenue (82) et un second moyen de retenue (84) entre lesquels la section de manchon axialement avant (58) et la section de manchon axialement arrière (60) sont montées, le premier moyen de retenue (82) étant de préférence formé par un anneau de retenue qui soutient la section de manchon axialement avant (58) et qui est relié au manchon de logement (80), et le second moyen de retenue (84) étant en outre de préférence formé par une saillie radiale (86) qui soutient la section de manchon axialement arrière (60) et qui est réalisée dans le manchon de logement (80).

9. Dispositif d'étanchéité selon l'une des revendications précédentes, **caractérisé en ce qu'**il forme un logement sous la forme d'un palier lisse pour permettre des mouvements de la conduite de fluide (40) dans la direction axiale (AR).

10. Carter intermédiaire de turbine (34) d'une turbine à gaz (10), en particulier d'une turbine à gaz d'avion, comportant un canal annulaire (36) guidant un gaz chaud et au moins un palier radialement intérieur destiné à soutenir au moins un arbre (28, 30) de la turbine à gaz (10), le carter intermédiaire de turbine (34) comportant plusieurs entretoises (38) qui soutiennent l'au moins un palier et qui s'étendent depuis le palier à travers le canal annulaire (36), **caractérisé en ce qu'**un dispositif d'étanchéité (50) selon l'une des revendications précédentes est logé dans au moins l'une des entretoises (38).

11. Carter intermédiaire de turbine selon la revendication 10, **caractérisé en ce que** le dispositif d'étanchéité (50) est disposé sur le côté de l'entretoise (38) orienté vers le palier.
